Europäisches Patentamt

European Patent Office

Office européen des brevets

(11) Publication number: **0 062 077**

**B1**

# (12) EUROPEAN PATENT SPECIFICATION

(45) Date of publication of patent specification: **12.04.89**

(51) Int. Cl.⁴: **G 05 B 19/403**

(21) Application number: **81902767.3**

(22) Date of filing: **13.10.81**

(86) International application number:
**PCT/JP81/00279**

(87) International publication number:
**WO 82/01425 29.04.82 Gazette 82/11**

(54) NUMERICAL CONTROL DEVICE WITH OPTIONAL BLOCK SKIP FUNCTION.

(30) Priority: **13.10.80 JP 142569/80**

(43) Date of publication of application:
**13.10.82 Bulletin 82/41**

(45) Publication of the grant of the patent:
**12.04.89 Bulletin 89/15**

(84) Designated Contracting States:
**CH DE FR GB LI**

(56) References cited:
**US-A-3 685 022**

(73) Proprietor: **FANUC LTD**
**3580, Shibokusa Aza-Komanba Oshino-mura**
**Minamitsuru-gun Yamanashi 401-05 (JP)**

(72) Inventor: **NOZAWA, Ryoichiro**
**12-1-2105, Sarugaku-cho Shibuya-ku**
**Tokyo 150 (JP)**
Inventor: **NAGAMINE, Tsuyoshi**
**11-9, Owada-cho 7-chome, Hachioji-shi**
**Tokyo 192 (JP)**
Inventor: **KAWAMURA, Hideaki**
**1375-5, Narahara-cho Hachioji-shi**
**Tokyo 193 (JP)**
Inventor: **MIYATA, Mitsuto**
**Room 38-4 Nanyodai 1768-149, Shimoyugi**
**Hachioji-shi Tokyo 192-03 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to improvement in a numerical controller equipped with an optional block skip function.

Conventional apparatus of this kind are arranged so that in the case where a special character, such as a slash (a symbol /), is added to a block at the head thereof, when an optional block skip switch on an operator panel is ON, information of the concerned block is skipped and regarded as invalid and only when the switch is OFF, the information of the concerned block is regarded as valid and delivered out to a buffer storage circuit for execution. That is, the prior art apparatus permit only such an option whether to execute a predetermined block in a specified section in a series of programs.

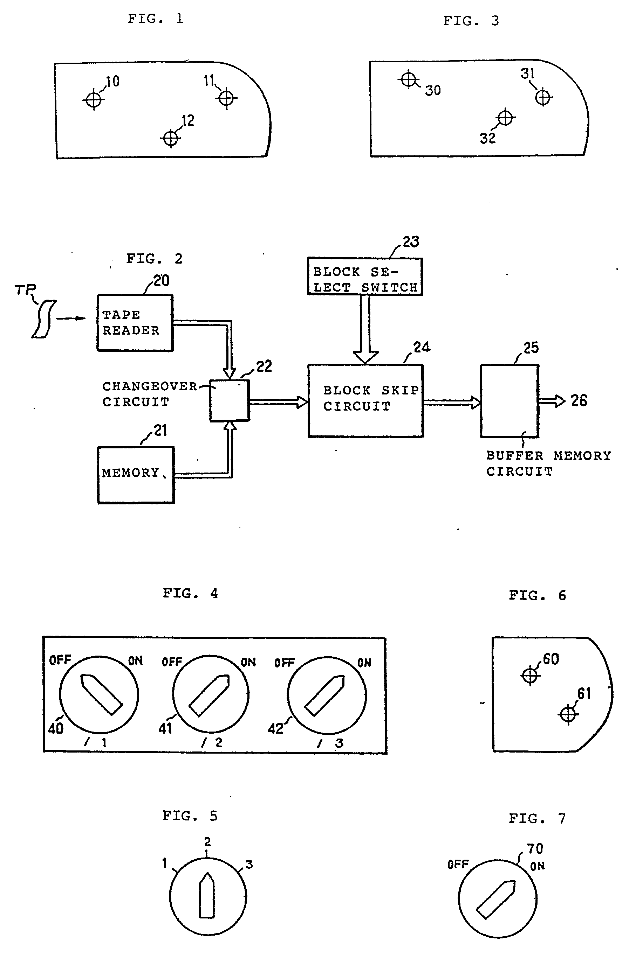

Accordingly, it is possible to effect such an option of cutting a plate of such a shape as shown in Fig. 1 and boring at positions 10 and 11 in a certain lot and, in the next lot, boring only at the position 10 after cutting, but it is impossible to obtain such an optional function of boring at a position 12 instead of 11 after cutting in the next lot. Such a procedure is shown in James J. Childs, "Principles of Numerical Control", Industrial Press. Inc., New York, N.Y., USA, page 237.

JP—B1—53-9056 discloses a program control device allowing the execution of one of two alternative sub-programs A or B in accordance with so-called "external conditions". The decision whether to execute A or B appears to be entirely independent of any information contained in A or B.

US—A—3 685 022 discloses a machining tape containing a range of alternative machining programs for use with respective different-sized tools. A selector switch is set in accordance with the tool in use and determines which one (and only one) of the machine programs is to be executed.

According to the present invention, there is provided a numerical controller equipped with an optional block skip function, provided with a numerical information storage medium for storing a machining program comprising a series of blocks, a plurality among the blocks each including at its head or at an intermediate portion, skip object indicating information indicating that the block may be the object of optional block skip control, and having a block skip circuit for checking whether or not the skip object indicating information is provided in each block read out from the numerical information storage medium;

characterised in that each of said plurality of blocks among the series of blocks further includes skip select information used for deciding whether in fact to skip the block, which skip select information can assume one of at least two distinct values;

and in that the numerical controller is further provided with block select switching means for selecting, for each possible value of the skip select information, whether the or each block stored as an object of the optional block skip control and having that value of the skip select information is to be validated or invalidated in actual working;

wherein, in use, the block skip circuit checks whether or not the skip object indicating information is added to the head or intermediate portion of each block read out from the numerical information storage medium, and, if not, executes the block but, in the case of the information being added, collates the skip select information in that block with information from the block select switching means, and skips or executes the block depending on whether the block is to be invalidated or validated.

The present invention addresses the above-mentioned problem existing in the prior art, and an embodiment of the invention may enable the selection of a desired block in a certain specified section in an execution program, thereby to extend the optional block skip function. In the present invention, a specified block is provided with skip object indicating information, and skip select information which serves as data for deciding whether to skip over the block and can assume at least two values. By the adoption of the skip select information which can take a binary value, an optional block can be selected from a plurality of blocks.

Reference is made, by way of example, to the accompanying drawings in which:—

Fig. 1 is a cutting path diagram explanatory of the operation of a prior art example; Fig. 2 is a block diagram illustrating the principal parts of equipment embodying the present invention; Fig. 3 is a cutting path diagram explanatory of the operation of the equipment shown in Fig. 2; Figs. 4, 5 and 7 are plan views showing block select switches; and Fig. 6 is a cutting path diagram explanatory of another embodiment of the present invention.

Fig. 2 is a block diagram illustrating the principal parts of equipment embodying the present invention. Reference numeral 20 indicates a tape reader, 21 a memory, 22 a changeover switch, 23 a block select switch, 24 a block skip circuit, 25 a buffer memory circuit, 26 a data processing unit, and TP a command tape. Fig. 3 is a cutting path diagram explanatory of the operation of the equipment shown in Fig. 2, reference numerals 30 to 32 indicating the positions where to make holes.

In the case of making a hole at that one of the positions 30 to 32 which is specified by the operator in Fig. 3, three blocks such as given below are inserted in a section of boring step in a cutting program:

```
/ 1 N 1 2 3 G 8 1 X 3 0 - - - X
/ 2 N 1 2 3 G 8 1 X 3 1 - - - X
/ 3 N 1 2 3 G 8 1 X 3 2 - - - X
```

Here, the slash / added to the head of each block is skip object indicating information indicating that the block is an object of optional block skip control, and the characters 1, 2 and 3 immediately following the slash are skip select information for use in deciding whether to skip the block. Incidentally, N 1 2 3 is a sequence number; G 8 1 X 3 0 ..., G 8 1 X 3 1 ... and G 8 1 X 3 2 ... are data words instructing boring at the positions 30 to 32; and X is a character indicating the end of the block.

The program having inserted therein such three blocks as mentioned above is stored in the form of a command tape TP by punching a numerical information storage medium, such as a paper tape, or the program is stored as numerical information directly in the memory 21.

On the operator panel is further provided the block select switch 23 for entering information as to which ones of the blocks stored as the objects of the optional block skip control in the numerical information storage medium are to be made valid and invalid in actual cutting. The block select switch 23 is, in concrete terms, comprised of three switches 40, 41 and 42 disposed corresponding to the skip select information 1, 2 and 3, for instance, as shown in a plan view of Fig. 4. From a switch in the OFF state, information to the effect that the block corresponding to the switch is valid is sent to the block skip circuit 24 and, from a switch in the ON state, information to the effect that the block corresponding to the switch is invalid is sent to the block skip circuit 24. In the illustrated example, since only the switch 40 is OFF, information to the effect that only the block related to / 1 is valid is sent out. The block select circuit shown in Fig. 4 can also be replaced with such a single switch as, for example, shown in Fig. 5 which is marked with three graduations 1, 2 and 3. In this case, the switch is designed so that when the operator selects a switch position i (i=1, 2, 3), a block related to / i in the program is selected.

The cutting program stored on the command tape TP or in memory 21 is provided via the changeover circuit 22 to the block skip circuit 24. The block skip circuit 24 checks whether the skip object indicating information / is added to the head of each block in the cutting program and, if such information is not added, the block is sent to the buffer circuit 25 because it an ordinary block which is not the object of the optional block skip control.

If the skip object indicating information / is added, the skip select information immediately following the skip object indicating information / is collated with information from the block select switch 23 and, when it turns out as a result of the collation that the block is one to be made invalid, the block is skipped over. That is to say, the block is not sent to the buffer memory circuit 25 and is invalidated. As a result of the collation, if the block is one that is to be validated, the block is sent to the buffer memory circuit 25 as is the case with the ordinary block. In the illustrated example of Fig. 4, only the block of

/ N 1 2 3 G 8 1 X 3 0 - - - X

is sent to the buffer memory circuit 25, from which it is provided to the data processing unit 26, making a hole at the position 30.

In Fig. 4, if only the switch 51 is held in the OFF state, the block of

/ 2 N 1 2 3 G 8 1 X 3 1 - - - X

is executed and, if only the switch 42 is held OFF, the block of

/ 3 N 1 2 3 G 8 1 X 3 2 - - - X

is executed.

Fig. 6 is a cutting path diagram explanatory of the operation of another embodiment of the present invention, illustrating an embodiment suitable for use in the case where it is desired to make a hole at only one of positions 60 and 61.

In this embodiment, numeric codes which are equal in absolute value but opposite in polarity, for instance, +1 and −1, are used as the skip select information, and two blocks such as given below are inserted in a predetermined section of the program:

/ 1 N 1 2 3 G 8 1 X 6 0 - - - X

/ −1 N 1 2 3 G 8 1 X 6 1 - - - X

And, as the block select switch 23, only one switch 70 is provided as shown in Fig. 7, and such an arrangement is made that when this switch is ON, information to the effect that the block related to / −1 is validated and the block related to / 1 is invalidated is sent to the block skip circuit 24, and that when the switch is OFF, information reverse from the abovesaid one is sent to the block skip circuit 24. With such an arrangement, in the illustrated example, since the switch 70 is ON, the block of

/ −1 N 1 2 3 G 8 1 X 6 1 - - - X

is executed, carrying out boring at the position 61.

Further, it is considered to combine the above-described two embodiments as another embodiment. That is to say, four blocks such as given below are inserted in the program, using as the skip select information a plurality of numeric codes which can assume both positive and negative values, such, for instance, as +1, −1, +2 and −2:

/ 1 / 2 N 1 2 3 G 8 1 X 0 1 - - - X

/ −1 / 2 N 1 2 3 G 8 1 X 0 2 - - - X

/ 1 / −2 N 1 2 3 G 8 1 X 0 3 - - - X

/ −1 / −2 N 1 2 3 G 8 1 X 0 4 - - - X

and, for example, in the block select switch of Fig.

4, the switch 40 is made to correspond to the blocks related to / ±1 and the switch 41 is made to correspond to the blocks related to / ±2. And if it is predetermined that if there exists even one condition invalidating a block, the block is invalid, the block of

$$/1/-2N123G81X03---X$$

is selected in the illustrated example because the switch 40 is OFF and the switch 41 ON. In general, in the case of blocks including $k / ±n$, such as $/ ±n_1, / ±n_2, ----/ ±n_k$, it is possible to select one of $2^k$ blocks at maximum.

While in the foregoing the present invention has been described as being applied to boring, this is only for convenience of description and it is a matter of course that the present invention is applicable to other working. The gist of the present invention resides in that the skip object indicating information indicating that a block is the object of optional block skip control and the skip select information which serves as data for deciding whether to skip over the block and can take at least two values, are added to the head or intermediate portion of the block, and in that a desired block is selected from a plurality of blocks. Accordingly, various modifications and variations may be effected within the scope of the present invention.

As will be appreciated from the foregoing description, in embodiments of the present invention, a specified block has added to it skip object indicating information and skip select information which serves as data for deciding whether to skip over the block and can assume at least two values, and, by the adoption of the skip select information which can take a binary value, a desired block can be selected from a plurality of blocks. Accordingly, it is possible to select a desired block in a specific section of an execution program in such a manner as to execute a step A on one occasion and a step B on another occasion using one cutting program. Thus, the invention has the advantage that the manoeuverability and function of the numeral controller can markedly be improved.

**Claims**

1. A numerical controller equipped with an optional block skip function, provided with a numerical information storage medium (TP, 20, 20) for storing a machining program comprising a series of blocks, a plurality among the blocks each including at its head or at an intermediate portion, skip object indicating information (/) indicating that the block may be the object of optional block skip control, and having a block skip circuit (24) for checking whether or not the skip object indicating information (/) is provided in each block read out from the numerical information storage medium (TP 20, 21);

characterised in that each of said plurality of blocks among the series of blocks further includes skip select information (1, 2, 3...; ±n, n=1, 2...k) used for deciding whether in fact to skip the block, which skip select information can assume one of at least two distinct values;

and in that the numerical controller is further provided with block select switching means (23) for selecting, for each possible value of the skip select information, whether the or each block stored as an object of the optional block skip control and having that value of the skip select information is to be validated or invalidated in actual working;

wherein, in use, the block skip circuit (24) checks whether or not the skip object indicating information (/) is present at the head or intermediate portion of each block read out from the numerical information storage medium (TP, 20, 21), and, if not, executes the block but, in the case of the information being present, collates the skip select information (1, 2, 3...; ±n, n=1, 2...k) in that block with information from the block select switching means (23), and skips or executes the block depending on whether the block is to be invalidated or validated.

2. A numerical controller as claimed in claim 1, wherein said block select switching means (23) comprises a plurality of switches (40—42), a respective said switch being provided for each possible value of the skip select information (1, 2, 3...) (Fig. 4).

3. A numerical controller as claimed in claim 1, wherein said block select switching means (23) comprises a single switching control having a plurality of switching positions (1, 2, 3), a respective said switching position being provided for each possible value of the skip select information. (Fig. 5)

4. A numerical controller as claimed in claim 1, 2 or 3, wherein each distinct value of the skip select information (1, 2, 3...; ±n, n=1, 2...n) is assigned to a respective one of said plurality of blocks.

5. A numerical controller as claimed in claim 1, 2 or 3, in which there are two possible values of the skip select information.

6. A numerical controller as claimed in claim 5, wherein the block select switching means (23) is switchable between a first state, in which the first possible value of the skip select information validates the or each relevant block, and the second possible value invalidates the or each relevant block; and a second state in which the first possible value of the skip select information invalidates the or each relevant block, and the second possible value validates the or each relevant block.

7. A numerical controller as claimed in any preceding claim, wherein the skip object indicating information consists of a single predetermined symbol (/).

8. A numerical controller as claimed in any preceding claim, wherein the skip select information consists of a numerical code.

9. A numerical controller as claimed in claim 6, wherein the skip select information consists of the two possible values "+1" and "−1".

10. A numerical controller as claimed in any one of claims 1 to 4, wherein the skip select information is of the form ±n; n=1, 2, . . . k; wherein n designates a respective switch means, each having two possible states, of the block select switching means (23), and + or − designates whether the first possible state of each said switch means validates the or each relevant block and the second possible state invalidates the or each relevant block, or vice-versa.

**Patentansprüche**

1. Numerische Steuervorrichtung, die mit einer fakultativen Blocküberspringerfunktion ausgestattet ist, mit einem numerischen Informationsspeichermittel (TP, 20, 21) zum Speichern eines Bearbeitungsprogramms versehen ist, das eine Reihe von Blöcken umfaßt, wobei mehrere dieser Blöcke jeweils in deren Kopfteil oder in deren Zwischenbereich eine Überspringerobjekt-Anzeigeinformation (/) enthalten, die anzeigt, daß der Block Objekt einer fakultativen Blocküberspringersteuerung sein kann, und eine Blocküberspringerschaltung (24) zum Prüfen hat, ob die Überspringerobjekt-Anzeigeinformation (/) in jedem Block, der aus dem numerischen Informationsspeichermittel (TP, 20, 21) ausgelesen wird, vorgesehen oder nicht vorgesehen ist, dadurch gekennzeichnet,

—daß jeder der Blöcke aus den mehreren Blökken desweiteren eine Überspringer-Auswahlinformation (1, 2, 3 . . .; ±n, n=1, 2 . . . k) enthält, die zum Entscheiden benutzt wird, ob der Block tatsächlich zu überspringen ist, welche Überspringer-Auswahlinformation einen von zumindest zwei eindeutigen Werten annehmen kann, und

—das die numerische Steuervorrichtung desweiteren mit einem Blockauswahlschaltmittel (23) versehen ist zum Auswählen für jeden möglichen Wert der Überspringer-Auswahlinformation, ob der oder jeder Block, der als ein Objekt des fakultativen Blocküberspringersteuerung gespeichert ist und diesen Wert der Überspringer-Auswahlinformation hat, bei der tatsächlichen Bearbeitung wirksam oder nicht wirksam gemacht werden soll,

wobei, die Blocküberspringerschaltung (24) im Betrieb prüft, ob die Überspringerobjekt-Anzeigeinformation (/) in dem Kopfteil oder in dem Zwischenbereich jedes Blocks vorliegt oder nicht vorliegt, der aus dem numerischen Informationsspeichermittel (TP, 20, 21) ausgelesen ist, und falls sie nicht vorliegt, den Block ausführt, jedoch in dem Fall, in dem die Information vorliegt, die Überspringer-Auswahlinformation (1, 2, 3 . . .; ±n, n=1, 2 . . . k) in diesem Block mit Information aus dem Blockauswahlschaltmittel (23) vergleicht und den Block abhängig davon überspringt oder ausführt, ob der Block nicht wirksam oder wirksam zu machen ist.

2. Numerische Steuervorrichtung nach Anspruch 1, bei der das Blockauswahlschaltmittel (23) mehreren Schalter (40—42) umfaßt, wobei für jeden möglichen Wert der Überspringer-Auswahlinformation (1, 2, 3 . . .) ein Schalter vorgesehen ist (Fig. 4).

3. Numerische Steuervorrichtung nach Anspruch 1, bei der das Blockauswahlschaltmittel (23) eine einzige Schalsteuerung umfaßt, die mehrere Schaltstellungen (1, 2, 3) aufweist, wobei für jeden möglichen Wert der Überspringer-Auswahlinformation eine Schaltstellung vorgesehen ist (Fig. 5).

4. Numerische Steuervorrichtung nach Anspruch 1, 2 oder 3, bei der jeder eindeutige Wert der Überspringer-Auswahlinformation (1, 2, 3 . . .; ±n, n=1, 2 . . . k) einem betreffenden aus den mehreren Blöcken zugeordnet ist.

5. Numerische Steuervorrichtung nach Anspruch 1, 2 oder 3, bei der zwei mögliche Werte der Überspringer-Auswahlinformation gegeben sind.

6. Numerische Steuervorrichtung nach Anspruch 5, bei der das Blockauswahlschaltmittel (23) zwischen einem ersten Zustand, in dem der erste mögliche Wert der Überspringer-Auswahlinformation den oder jeden relevanten Block wirksam macht und der zweite mögliche Wert den oder jeden relevanten Block nicht wirksam macht, und einem zweiten Zustand, in dem der erste mögliche Wert der Überspringer-Auswahlinformation den oder jeden relevanten Block nicht wirksam macht und der zweite mögliche Wert den oder jeden relevanten Block wirksam macht, umschaltbar ist.

7. Numerische Steuervorrichtung nach einem der vorhergehenden Ansprüche, bei der die Überspringerobjekt-Anzeigeinformation aus einem einzigen vorbestimmten Symbol (/) besteht.

8. Numerische Steuervorrichtung nach einem der vorhergehenden Ansprüche, bei der die Überspringer-Auswahlinformation aus einem numerischen Code besteht.

9. Numerische Steuervorrichtung nach Anspruch 6, bei der die Überspringer-Auswahlinformation aus den zwei möglichen Werten "+1" und "−1" besteht.

10. Numerische Steuervorrichtung nach einem der Ansprüche 1 bis 4, bei der die Überspringer-Auswahlinformation von der Form ±n; n=1, 2 . . . k ist, wobei n ein betreffendes der Schaltmittel des Blockwauswahlschaltmittels (23) bezeichnet, wovon denen jedes zwei mögliche Zustände hat, und + oder − angibt, ob der erste mögliche Zustand jedes der Schaltmittel den oder jeden relevanten Block wirksam macht und der zweite mögliche Zustand den oder jeden relevanten Block nicht wirksam macht oder umgekehrt.

**Revendications**

1. Un contrôleur numérique comportant une fonction de saut de bloc facultatif, qui comprend un support d'enregistrement d'information numérique (TP, 20, 21) pour enregistrer un programme d'usinage comprenant une série de blocs, chaque bloc parmi un ensemble de ces blocs comprenant en tête ou dans une partie intermédiaire une information d'indication de saut (/) qui indique que le bloc peut être l'objet d'une commande facultative de saut de bloc, et comprenant un circuit de saut de bloc (24) destiné à déterminer si l'information d'indication de saut (/) est présente ou non dans chaque bloc qui est lu dans le support d'enregistrement d'information numérique (TP, 20 21);

caractérisé en ce que chaque bloc de l'ensemble de blocs parm la série de blocs comprend en outre une information de sélection de saut (1, 2, 3...; ±n, n=1, 2... k) qu'on utilise pour déterminer si en fait le bloc doit être sauté ou non, cette information de sélection de saut pouvant prendre une valeur parmi ou moins deux valeurs distinctes;

et en ce que le contrôleur numérique comporte en outre des moyens de commutation de sélection de bloc (23) pour sélectionner, pour chaque valeur possible de l'information de sélection de saut, si le bloc ou chaque bloc qui est enregistré comme devant faire l'objet de la commande facultative de saut de bloc, et ayant cette valeur de l'information de sélection de saut, doit être validé ou invalidé dans le travail réel;

et dans lequel, pendant l'utilisation, le circuit de saut de bloc (24) détermine si l'information d'indication de saut (/) est présente ou non en tête ou dans une partie intermédiaire de chaque bloc qui est lu dans le support d'enregistrement d'information numérique (TP, 20, 21), et, dans la négative, il exécute le bloc, tandis que dans le cas où l'information est présente, il rapproche l'information de sélection de saut (1, 2, 3...; ±n, n=1, 2...k) dans ce bloc et l'information provenant des moyens de commutation de sélection de bloc (23), et il saute ou exécute le bloc selon que le bloc doit être invalidé ou validé.

2. Un contrôleur numérique selon la revendication 1, dans lequel les moyens de commutation de sélection de bloc (23) comprennent un ensemble d'interrupteurs (40—42), avec un interrupteur respectif prévu pour chaqua valeur possible de l'information de sélection de saut (1, 2, 3...) (figure 4).

3. Un contrôleur numérique selon la revendication 1, dans lequel les moyens de commutation de sélection de bloc (23) comprennent un seul dispositif de commande de commutation ayant un ensemble de positions de commutation (1, 2, 3), avec l'une respective des positions de commutation prévue pour chaque valeur possible de l'information de sélection de saut (figure 5).

4. Un contrôleur numérique selon la revendication 1, 2 ou 3, dans lequel chaque valeur distincte de l'information de sélection de saut (1, 2, 3...; ±n, n=1, 2...k) est affectée à un bloc respectif de l'ensemble de blocs.

5. Un contrôleur numérique selon la revendication 1, 2 ou 3, dans lequel il y a deux valeurs possibles de l'information de sélection de saut.

6. Un contrôleur numérique selon la revendication 5, dans lequel les moyens de commutation de sélection de bloc (23) peuvent être commutés entre un premier état, dans lequel la première valeur possible de l'information de sélection de saut valide le bloc ou chaque bloc concerné, et la seconde valeur possible invalide le bloc ou chaque bloc concerné; et un second état dans lequel la première valeur possible de l'information de sélection de saut invalide le bloc ou chaque bloc concerné, et la seconde valeur possible valide le bloc ou chaque bloc concerné.

7. Un contrôleur numérique selon l'une quelconque des revendications précédentes, dans lequel l'information d'indication de saut consiste en un seul symbole prédéterminé (/).

8. Un contrôleur numérique selon l'une quelconque des revendications précédentes, dans lequel l'information de sélection de saut consiste en un code numérique.

9. Un contrôleur numérique selon la revendication 6, dans lequel l'information de sélection de saut comprend les deux valeurs possibles "+1" et "−1".

10. Un contrôleur numérique selon l'une quelconque des revendications 1 à 4, dans lequel l'information de sélection de saut est de la forme ±n; n=1, 2,...k, dans laquelle n désigne un élément de commutation respectif, ayant deux états possibles, des moyens de commutation de sélection de bloc (23), et + ou − indique si le premier état possible de chaque élément de commutation valide le bloc ou chaque bloc concerné et le second état possible invalide le bloc ou chaque bloc concerné, ou inversement.

FIG. 1

FIG. 3

FIG. 2

TP

TAPE
READER `20`

CHANGEOVER
CIRCUIT `22`

MEMORY `21`

BLOCK SE-
LECT SWITCH `23`

BLOCK SKIP
CIRCUIT `24`

BUFFER MEMORY
CIRCUIT `25`

`26`

FIG. 4

OFF   ON   OFF   ON   OFF   ON

`40` / 1   `41` / 2   `42` / 3

FIG. 6

`60`

`61`

FIG. 5

2
1   3

FIG. 7

`70`
OFF   ON